# EUROPEAN PATENT SPECIFICATION

(11) **EP 2 914 152 B1**
(45) Date of publication and mention of the grant of the patent: **12.07.2017**
(21) Application number: 13850321.4
(22) Date of filing: 25.10.2013
(51) Int. Cl.: A47J 43/07, B02C 18/18

(54) **DEVICE FOR DISINTEGRATING FOOD WASTE COMPRISING BONES**
VORRICHTUNG ZUM ZERKLEINERN VON SPEISERESTEN MIT KNOCHEN
DISPOSITIF DE DÉSINTÉGRATION DE DÉCHETS ALIMENTAIRES COMPRENANT DES OS

(30) Priority: 31.10.2012 SE 1251229
(43) Date of publication of application: 09.09.2015
(73) Proprietor: Diskomat AB, 117 43 Stockholm (SE)
(72) Inventor: EKSTRÖM, Ulf, 187 51 Täby (SE)
(74) Representative: Noréns Patentbyrå AB
(86) International application number: PCT/SE2013/051254
(87) International publication number: WO 2014/070080

(56) References cited:
- EP-A2- 0 598 306
- WO-A2-2010/013904
- DE-U1- 9 115 919
- US-A- 4 194 697
- US-A1- 2004 245 358
- US-A1- 2005 236 502

## Description

The present invention relates to a device for disintegrating food waste comprising bones. In catering kitchens and restaurants, large amounts of food waste are produced. These are usually separated during washing up. It is advantageous to disintegrate the leftovers and to feed these to a collecting tank. An advantageous way of transporting away the leftovers is to suck them up from out of the collecting tank and into a truck for removal.

An increasingly more common way to take care of food leftovers is to transport these to a biogas plant, where the leftovers are transformed into biogas for use as vehicle propellant.

In order to transport the food leftovers to the collecting tank, the leftovers must be disintegrated so that they can be transported in pipes without stoppage. This is particularly true as regards bones from birds, fish and also other types of bones, such as bones from meat chops. Moreover, it is advantageous for the biogas plant that the food leftovers are disintegrated.

In order to disintegrate bones, mill grinders are known wherein two parts with projections exist, where each part has a projection with a space between two adjacent projections and where the parts are mutually displaced so that the projections on a first side pass between the spaces on a second side. Such mill grinders have strong motors, requiring electrical connection to three phases.

However, such mill grinders are so costly so that an investment cannot be motivated when it comes to smaller catering kitchens, such as school kitchens and smaller restaurants. Hence, there is a need for a simpler and cheaper device for disintegrating food residuals.

It is known to disintegrate raw food ingredients using kitchen appliances comprising a rotating cutting disc. These operate on the principle that the cutting disc is provided with an opening, by which a knife is mounted on the cutting disc. When the cutting disc rotates, the knife of the cutting disc cuts off a part of the raw ingredient, which thereafter passes down through the opening of the cutting disc down to a collecting vessel. Such a kitchen appliance normally requires only an electrical connection to one phase.

It has turned out that bones are not always cut by such a cutting disc. This is of course a problem. Also, it gives rise to another problem, in that bone residues aggregate on top of the cutting disc. Document WO-A-2010/013904 discloses a food waste shredder. The present invention solves the problem of disintegrating food leftovers including bones with a rotating cutting disc. Thereby, a kitchen appliance of the above type can be used, which means a considerably lower cost as compared to using a grinding mill of the above mentioned type.

Hence, the present invention relates to a device for disintegrating food waste, comprising bones, at a machine for cutting vegetables using a rotating disc provided with an opening in the disc and a knife arranged by and along the opening, which cutting disc is mounted on a driven vertical axis, and wherein the cutting disc is arranged in the lower part of a cylindrical housing into which food leftovers are arranged to be fed down from above the cutting disc, and is characterised in that a stationary stopping means is mounted above the cutting disc and from the center of the cutting disc to the periphery of the cutting disc, in that the stopping means extends a certain distance upwards from the cutting disc, in that the stopping means has a stopping surface, facing in a direction opposite to the direction of motion of the cutting disc, in that the angle between the edge of the knife and the stopping surface in a rotational position of the cutting disc, in which they partly overlap as seen in a direction perpendicularly to the plane of the cutting disc, opens inwards towards the center of the cutting disc, and in that the vertical distance between the edge of the knife and the underside of the stopping means allows cutting of bones, but is less than about 1 millimeters.

Below, the invention is described in closer detail, partly in connection to an embodiment of the invention shown in the enclosed drawing, wherein
- figure 1 shows a cutting disc from above
- figure 2 shows the cutting disc of figure 1 from below
- figure 3 shows the cutting disc from the side and a stopping means according to the invention
- figure 4 is a perspective view of the cutting disc and the stopping means
- figure 5 shows the cutting disc and the stopping means from above.

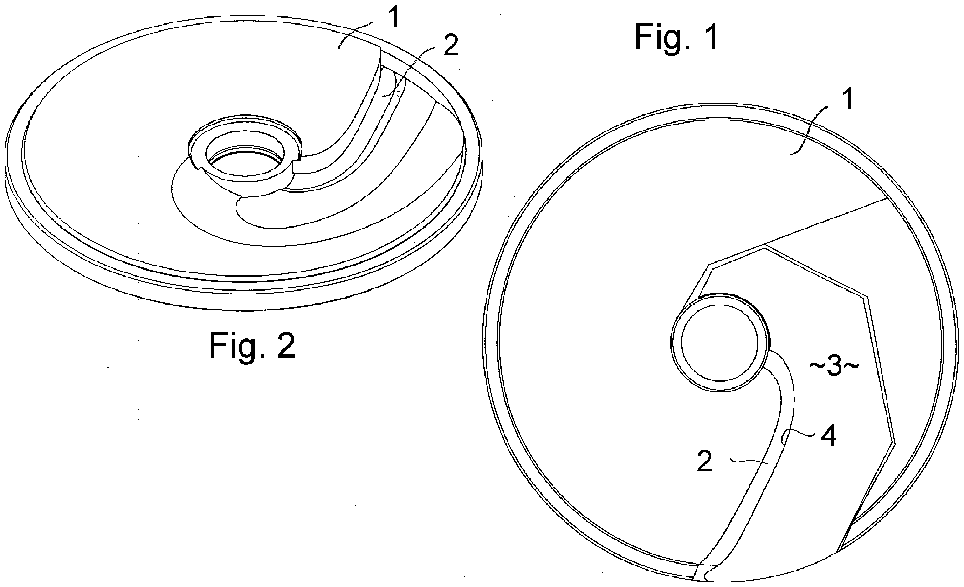

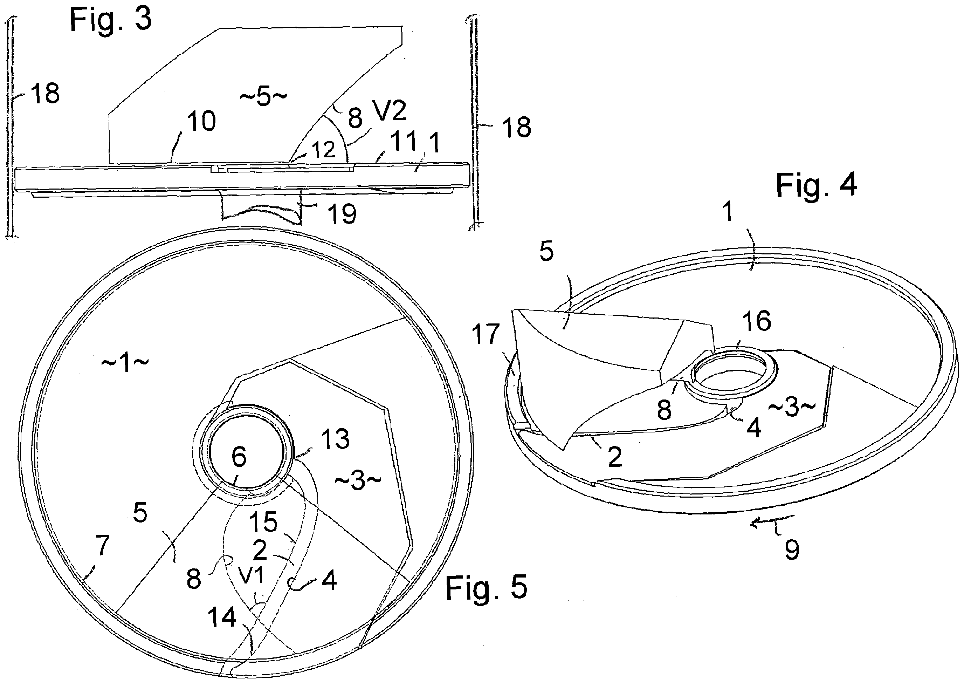

Hence, the invention relates to a device for disintegrating food waste comprising bones using a rotating disc provided with an opening 2 in the disc and a knife 3 arranged by and along the opening 2. The edge of the knife is labeled 4. The cutting disc is mounted on a driven vertical axis 19, and the cutting disc is arranged in the lower part of a cylindrical housing in a conventional cutting machine for cutting vegetables. In the figures, such a conventional cutting machine is not shown. The cylindrical housing 18 is suggested in figure 3. Food leftovers are intended to be fed down into the cylindrical house from above the cutting disc 1. In figure 1, the cutting disc rotates clockwise. During operation, the knife cuts through the food leftovers, whereby cut-off parts pass down through the opening 2 to a trough or the corresponding for feeding out of the cut-off pieces.

According to the invention, a stationary stopping means 5 is mounted above the cutting disc 1, which extends from the center 6 of the cutting disc to the periphery 7 of the cutting disc. The stopping means 5 extends a certain distance upwards from the cutting disc 1, see figures 3 and 4. The height of the stopping means may be 2 - 10 centimeters.

The stopping means 5 has a stopping surface 8, which faces in a direction opposite to the rotational direction 9 of the cutting disc.

An essential feature is that an angle V1 between the edge 4 of the knife 3 and the lower edge of the stopping surface 8 in a rotational position of the cutting disc, in which the edge 4 of the knife and the lower edge 12 of the stopping surface partly overlap, as seen in a direction perpendicularly to the plane of the cutting disc 1, opens inwards towards the center of the cutting disc 1.

This is essential since the space between the edge of the knife and the said stopping surface will strive to displace bones inwards towards the center of the cutting disc, where the force for cutting through a bone increases the closer the bone is to the center of the cutting disc. That the knife edge is bent inwards towards the center of the cutting disc also contributes to that bones are more easily cut off.

The cutting disc 1 is suitably made from stainless steel or aluminum. The knife 2 is made from steel. The stopping means may be made in a suitable known material, such as Teflon or another plastic material or a metal.

The stopping means 5 may abut against the upper side of the cutting disc 1, but there may also be a certain distance between the underside of the stopping means and the upper side of the cutting disc. Such a distance should be smaller than the larges cross-sectional measure of said bone.

According to a preferred embodiment, the knife is curved with its inner 13 and outer 14 ends arranged further forward in the direction of motion of the cutting disc than the section 15 located between the ends.

According to another preferred embodiment, the knife 3 extends from a central sleeve 16 belonging to the cutting disc to a peripheral edge 17 of the cutting disc.

It is preferred that the said stopping surface 8 is planar or essentially planar, and that it is radially or essentially radially positioned in relation to the cutting disc 1.

Furthermore, it is preferred that the said stopping surface 8 slants, so that it forms an acute angle V2 in relation to the cutting disc 1 in a direction opposite to the direction 9 of motion of the cutting disc 1.

It is preferred that the angle is 30 - 60 degrees.

There is a vertical distance between the edge 4 of the knife and the underside 10 of the stopping means of 0.5 - 1 millimeters.

It is preferred that the vertical distance between the edge 4 of the knife and the upper surface of the cutting disc immediately in front of the knife is 2 - 4 millimeters, preferably 3 millimeters.

The said opening 2 between the edge 4 of the knife and the edge 15 of the cutting disc at the opening is 2 - 4 millimeters, preferably 3 millimeters.

It is preferred that the stopping means 5 is fastened to the said cylindrical housing 18.

The cutting disc 1 and the stopping means 5 are arranged to be mounted in a vegetable cutting machine of the mentioned type.

The slanting stopping surface 8 of the stopping means, in combination with the angle formed between the edge of the knife and the lower edge of the stopping means, results in that bones will not accumulate on top of the cutting disc, but will gradually be cut off and transported down through the opening of the cutting disc.

Hereby, the initially mentioned problem is solved.

Above, a number of embodiments have been described. It is apparent that the stopping means can be given another detailed design while maintaining its function.

Therefore, the present invention shall not be considered to be limited to the above given embodiments, but may be varied within the scope of the enclosed claims.

## Claims

1. Device for disintegrating food waste, comprising bones, at a machine for cutting vegetables using a rotating disc (1) provided with an opening (2) in the disc and a knife (3) arranged by and along the opening (2), which cutting disc (1) is mounted on a driven vertical axis (19), and wherein the cutting disc is arranged in the lower part of a cylindrical housing (18) into which food leftovers are arranged to be fed down from above the cutting disc, **characterised in that** a stationary stopping means (5) is mounted above the cutting disc (1) and from the center (16) of the cutting disc to the periphery (17) of the cutting disc, **in that** the stopping means (5) extends a certain distance upwards from the cutting disc, **in that** the stopping means (5) has a stopping surface (8), facing in a direction opposite to the direction (9) of motion of the cutting disc, **in that** the angle (V1) between the edge (4) of the knife and the stopping surface (8) in a rotational position of the cutting disc (1), in which the edge (4) of the knife and the stopping surface (8) partly overlap as seen in a direction perpendicularly to the plane of the cutting disc (1), opens inwards towards the center (16) of the cutting disc, and **in that** the vertical distance between the edge of the knife and the underside of the stopping means allows cutting of bones, but is less than about 1 millimeters.

2. Device according to claim 1, **characterised in that** the edge (4) of the knife (3) is curved with its inner (13) and outer (14) end further forward in the direction (9) of motion of the cutting disc than the section (15) located between the ends.

3. Device according to claim 1 or 2, **characterised in that** the knife (4) extends from a central sleeve (16) belonging to the cutting disc to a peripheral edge (17) of the cutting disc.

4. Device according to claim 1, 2 or 3, **characterised in that** the said stopping surface (8) is planar or essentially planar, and radially or essentially radially positioned relative to the cutting disc.

5. Device according to claim 1, 2, 3 or 4, **characterised in that** the said stopping surface (8) slants so that it forms an acute angle (V2) in relation to the cutting disc (1) in a direction which is opposite to the direction (9) of motion of the cutting disc (9).

6. Device according to claim 5, **characterised in that** the angle is 30 - 60 degrees.

7. Device according to claim 1, 2, 3, 4, 5 or 6, **characterised in that** the said vertical distance between the edge (4) of the knife and the underside (10) of the stopping means is 0.5 - 1 millimeters.

8. Device according to claim 1, 2, 3, 4, 5, 6 or 7, **characterised in that** the opening between the edge (4) of the knife and the edge (15) of the cutting disc at the opening is 2 - 4 millimeters, preferably 3 millimeters.

9. Device according to claim 1, 2, 3, 4, 5, 6, 7 or 8, **characterised in that** the vertical distance between the edge (4) of the knife and the upper surface of the cutting disc immediately in front of the knife is 2 - 4 millimeters, preferably 3 millimeters.

10. Device according to any one of the preceding claims, **characterised in that** the stopping means (5) is fastened to the said cylindrical housing (18).

11. Device according to any one of the preceding claims, **characterised in that** the cutting disc (1) and the stopping means (5) are arranged to be mounted in a vegetable cutting machine of the mentioned type.

## Patentansprüche

1. Vorrichtung zum Zerkleinern von Nahrungsmittelabfällen, umfassend Knochen, in einer Maschine zum Schneiden von Gemüse unter Verwendung einer mit einer Öffnung (2) in der Scheibe versehenen rotierenden Scheibe (1) und einem durch und entlang der Öffnung (2) angeordneten Messer (3) auf einer angetriebenen vertikalen Achse (19) montiert ist und wobei die Schneidscheibe im unteren Teil eines zylindrischen Gehäuses (18) angeordnet ist, in welches Lebensmittelreste eingegeben werden, um von der Schneidscheibe (1) herabgeführt zu werden, **dadurch gekennzeichnet, dass** oberhalb der Schneidscheibe (1) und von der Mitte (16) der Schneidscheibe zum Außenrand (17) der Schneidscheibe ein ortsfestes Stoppeinrichtung (5) angebracht ist, dass sich diese Stoppeinrichtung einen gewissen Abstand von der Schneidscheibe nach oben hin erstreckt, dass die Stoppeinrichtung (5) eine Anschlagfläche (8) in entgegengesetzter Richtung der Bewegungsrichtung (9) der Schneidscheibe (1) aufweist, dass der Winkel (V1) zwischen der Schneidekante (4) des Messers und der Anschlagfläche (8) in einer Drehstellung der Schneidscheibe (1), dass die Schneidkante (4) des Messers und die Anschlagfläche (8) teilweise überlappen, gesehen in einer Richtung, die senkrecht zur Fläche der Schneidscheibe (1) ist, und sich nach innen zur Mitte (16) der Schneidscheibe hin öffnet und dass der vertikale Abstand zwischen der Messerschneide und der Unterseite der Stoppeinrichtung das Schneiden von Knochen ermöglicht, jedoch unter etwa 1 Millimeter beträgt.

2. Vorrichtung gemäß Anspruch 1, **dadurch gekennzeichnet, dass** die Schneidekante (4) des Messers (3) bogenförmig ist mit dessen inneren (13) und äußeren (14) Ende weiter vorne in Richtung (9) der Bewegung der Schneidscheibe als der Bereich (16), der sich zwischen den Enden befindet.

3. Vorrichtung gemäß Ansprüchen 1 oder 2, **dadurch gekennzeichnet, dass** das Messer (4) sich von der Mittenhülse (16), welche zur Schneidscheibe gehört, bis zum Außenrand (17) der Schneidscheibe hin erstreckt.

4. Vorrichtung gemäß Ansprüchen 1, 2 oder 3, **dadurch gekennzeichnet, dass** besagte Anschlagfläche (8) eben ist oder weitgehend eben ist und strahlenförmig oder weitgehend strahlenförmig positioniert ist in Bezug auf die Schneidscheibe.

5. Vorrichtung gemäß Ansprüchen 1, 2, 3 oder 4, **dadurch gekennzeichnet, dass** sich besagte Anschlagfläche (8) abschrägt, so dass diese einen spitzen Winkel (V2) in Relation zur Schneidscheibe (1) formt in einer Richtung, die der Richtung (9) der Bewegung der Schneidscheibe (9) entgegengesetzt ist.

6. Vorrichtung gemäß Anspruch 5, **dadurch gekennzeichnet, dass** der Winkel 30 - 60 Grad beträgt.

7. Vorrichtung gemäß Ansprüchen 1, 2, 3, 4, 5 oder 6, **dadurch gekennzeichnet, dass** besagter vertikaler Abstand zwischen der Schneidekante (4) des Messers und der Unterseite (10) der Stoppeinrichtung 0,5 - 1 Millimeter beträgt.

8. Vorrichtung gemäß Ansprüchen 1, 2, 3, 4, 5, 6 oder 7, **dadurch gekennzeichnet, dass** die Öffnung zwischen der Schneidekante (4) des Messers und der Kante (15) der Schneidscheibe an der Öffnung 2-4 Millimeter, bevorzugt 3 Millimeter beträgt.

9. Vorrichtung gemäß Ansprüchen 1, 2, 3, 4, 5, 6, 7 oder 8, **dadurch gekennzeichnet, dass** der vertikale Abstand zwischen der Schneidekante (4) des Messers und der oberen Oberfläche der Schneidefläche unmittelbar vor dem Messer 2-4 Millimeter, bevorzugt 3 Millimeter beträgt.

10. Vorrichtung gemäß einem beliebigen der vorangehenden Ansprüche, **dadurch gekennzeichnet, dass** die Stoppeinrichtung (5) an das besagte zylindrische Gehäuse (18) befestigt ist.

11. Vorrichtung gemäß einem beliebigen der vorangehenden Ansprüche, **dadurch gekennzeichnet, dass** die Schneidscheibe (1) und die Stoppeinrichtung (5) so angeordnet sind, dass diese in einer Gemüseschneidmaschine des benannten Typs montiert werden können.

## Revendications

1. Dispositif de désintégration de déchets alimentaires, comprenant des os, à une machine de coupe de légumes utilisant un disque rotatif (1) ayant une ouverture (2) dans le disque et un couteau (3) disposé par et le long de l'ouverture (2), lequel disque de coupe (1) est monté sur un axe vertical entraîné (19), et le disque de coupe étant disposé dans la partie inférieure d'un logement cylindrique (18) dans lequel des restes alimentaires sont placés en vue d'être acheminés vers le bas à partir du dessus du disque de coupe, **caractérisé par le fait qu'**un moyen d'arrêt fixe (5) est monté au-dessus du disque de coupe (1) et du centre (16) du disque de coupe à la périphérie (17) du disque de coupe, **par le fait que** le moyen d'arrêt (5) s'étend sur une certaine distance vers le haut à partir du disque de coupe, **par le fait que** le moyen d'arrêt (5) a une surface d'arrêt (8), dirigée dans une direction opposée à la direction (9) de mouvement du disque de coupe, **par le fait que** l'angle (V1) entre le bord (4) du couteau et la surface d'arrêt (8) dans une position de rotation du disque de coupe (1) dans laquelle le bord (4) du couteau et la surface d'arrêt (8) se chevauchent partiellement comme vu dans une direction perpendiculaire au plan du disque de coupe (1), s'ouvre vers l'intérieur en direction du centre (16) du disque de coupe, et **par le fait que** la distance verticale entre le bord du couteau et le côté inférieur du moyen d'arrêt permet la découpe d'os, mais est de moins d'environ 1 millimètre.

2. Dispositif selon la revendication 1, **caractérisé par le fait que** le bord (4) du couteau (3) est incurvé avec ses extrémités interne (13) et externe (14) davantage vers l'avant dans la direction (9) de mouvement du disque de coupe que la section (15) située entre les extrémités.

3. Dispositif selon la revendication 1 ou 2, **caractérisé par le fait que** le couteau (4) s'étend d'un manchon central (16), appartenant au disque de coupe, à un bord périphérique (17) du disque de coupe.

4. Dispositif selon la revendication 1, 2 ou 3, **caractérisé par le fait que** ladite surface d'arrêt (8) est plane ou essentiellement plane, et positionnée radialement ou essentiellement radialement par rapport au disque de coupe.

5. Dispositif selon la revendication 1, 2, 3 ou 4, **caractérisé par le fait que** ladite surface d'arrêt (8) s'incline de telle sorte qu'elle forme un angle aigu (V2) par rapport au disque de coupe (1) dans une direction qui est opposée à la direction (9) de mouvement du disque de coupe (9).

6. Dispositif selon la revendication 5, **caractérisé par le fait que** l'angle est 30 - 60 degrés.

7. Dispositif selon la revendication 1, 2, 3, 4, 5 ou 6, **caractérisé par le fait que** ladite distance verticale entre le bord (4) du couteau et le côté inférieur (10) du moyen d'arrêt est 0,5 - 1 millimètre.

8. Dispositif selon la revendication 1, 2, 3, 4, 5, 6 ou 7, **caractérisé par le fait que** l'ouverture entre le bord (4) du couteau et le bord (15) du disque de coupe à l'ouverture est 2 - 4 millimètres, de préférence 3 millimètres.

9. Dispositif selon la revendication 1, 2, 3, 4, 5, 6, 7 ou 8, **caractérisé par le fait que** la distance verticale entre le bord (4) du couteau et la surface supérieure du disque de coupe immédiatement devant le couteau est 2 - 4 millimètres, de préférence 3 millimètres.

10. Dispositif selon l'une quelconque des revendications précédentes, **caractérisé par le fait que** le moyen d'arrêt (5) est fixé audit logement cylindrique (18).

11. Dispositif selon l'une quelconque des revendications précédentes, **caractérisé par le fait que** le disque de coupe (1) et le moyen d'arrêt (5) sont agencés pour être montés dans une machine de coupe de légumes du type mentionné.
